# EUROPEAN PATENT SPECIFICATION

(11) **EP 2 795 847 B1**
(45) Date of publication and mention of the grant of the patent: **04.05.2022**
(21) Application number: 12859039.5
(22) Date of filing: 20.12.2012
(51) Int. Cl.: H04L 12/28, H04L 29/06, H04L 29/08, G01D 4/02

(54) **SYSTEM AND METHOD FOR PROVIDING METERING DATA**
SYSTEM UND VERFAHREN ZUR BEREITSTELLUNG VON MESSDATEN
SYSTÈME ET PROCÉDÉ DE FOURNITURE DE DONNÉES DE MESURE

(30) Priority: 22.12.2011 US 201113335722; 24.02.2012 US 201261603112 P
(43) Date of publication of application: 29.10.2014
(73) Proprietor: Itron Networked Solutions, Inc., San Jose, California 95134 (US)
(72) Inventor: FLAMMER, George H., III, Redwood City, California 94063 (US); DOYLE, John, Redwood City, California 94063 (US); HUGHES, Sterling, Redwood City, California 94063 (US)
(74) Representative: Morrall, Jonathan Ian McLachlan
(86) International application number: PCT/US2012/071077
(87) International publication number: WO 2013/096690

(56) References cited:
- KR-A- 20090 045 001
- US-A1- 2007 139 163
- US-A1- 2008 186 145
- US-A1- 2008 297 312
- US-A1- 2009 184 804

## Description

### CROSS-REFERENCE TO RELATED APPLICATIONS

This application claims benefit of United States patent application serial number 13/335,722, filed December 22, 2011, and United States provisional patent application serial number provisional 61/603,112, filed February 24, 2012.

### BACKGROUND

### Technical Field

Embodiments of the present invention relate generally to wireless digital communication systems and, more specifically, to a system and method for providing metering data.

### Description of the Related Art

A radio frequency identifier (RFID) network typically includes a plurality of RFID interrogators, each configured to read data from certain RFID tags that are positioned in sufficiently close proximity. This data is then conventionally transmitted upstream via a backhaul network to a server configured to process the data or log the data for later processing. Each RFID tag is configured to store certain data, which may comprise read-only, writeable, or measured data. For example, an RFID tag may store a product code or serial number for an associated article of manufacture. An RFID interrogator retrieves data stored within the RFID tag via a radio frequency (RF) communication transaction.

Certain RFID tags are referred to as "passive," and typically derive operating power by harvesting ambient RF energy. When the RFID interrogator attempts to read a passive RFID tag, sufficient ambient RF energy is provided to the passive RFID tag to power up and operate. To transmit stored data to the RFID interrogator, passive RFID tags typically employ backscatter techniques, which modulate reflected RF energy originating from the RFID interrogator. Certain other RFID tags are referred to as "active," and typically derive operating power from a battery or other robust power source. To transmit stored data to the RFID interrogator, active RFID tags typically generate a modulated RF signal. In both cases, the RFID interrogator conventionally transmits data to the RFID tag, and the RFID tag transmits stored data back to the RFID interrogator. In both cases, RFID interrogators are typically configured to avoid interference with each other, for example by remaining inactive while nearby RFID interrogators transmit RF energy to perform read transactions with associated RFID tags.

One challenge in deploying an RFID network is implementing the backhaul network, which must be connected to each RFID interrogator. One approach to implementing the backhaul network involves coupling a wired data network, such as a wired Ethernet network, to each RFID interrogator. Implementing a conventional wired backhaul network for the RFID interrogators is generally expensive and complex, with each different RFID interrogator requiring that a separate cable be routed and coupled to the RFID interrogator from a wired data switch. Alternatively, the backhaul network may be conventionally implemented using a standard wireless data networking technology, such as the industry standard "WiFi" or related technologies. Implementing a backhaul network using conventional wireless data networking technologies generally eliminates much of the cost and complexity associated with a wired data network, but introduces different problems, such as potential interference from other legitimate users of the wireless data networking technology.

As the foregoing illustrates, what is needed in the art is a more efficient technique for interconnecting RFID interrogators.

US 2008/0186145 A1 discloses a system including at least one RFID tag and a mobile RFID reading operable to interrogate the at least one RFID tag. The system also includes a fixed RFID reader operable to interrogate the at least one RFID tag, the first fixed RFID reader configured to receive a request to interrogate the at least one RFID tag from the mobile RFID reader.

US 2009/0184804 A1 discloses a method in which the electrical energy consumption of a building is measured, and the measured data are sent over a telecommunications link to the desired party. RFID devices are used to produce and read information on the building, and an energy meter and its telecommunications links are used to forward the RFID-based building information.

### SUMMARY

An invention is defined as set out in the appended claims, as follows:

A computer-implemented method for transmitting and receiving data via a radio signal is defined in appended claim 1.

A computer program product is defined in appended claim 11.

A wireless network device is defined in appended claim 12.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Figure 1A illustrates a wireless network, configured to implement one or more aspects of the present invention;
Figure 1B illustrates an interrogator element configured to operate within the wireless network of Figure 1A, according to one embodiment of the invention;
Figure 2 illustrates a digital radio transceiver configured to implement one or more aspects of the present invention;
Figure 3A is a flow diagram of a method for bidirectional communication performed by an interrogator element, according to one embodiment of the invention; and
Figure 3B is a flow diagram of a method for bidirectional communication performed by an interrogator element, according to one embodiment of the invention.
Figure 4 illustrates a metering network, according to one embodiment of the present invention.
Figure 5 is a flow diagram of method steps for transmitting metering data via a metering network, according to one embodiment of the present invention.

### DETAILED DESCRIPTION

In the following description, numerous specific details are set forth to provide a more thorough understanding of the present invention. However, it will be apparent to one of skill in the art that the present invention may be practiced without one or more of these specific details. In other instances, well-known features have not been described in order to avoid obscuring the present invention.

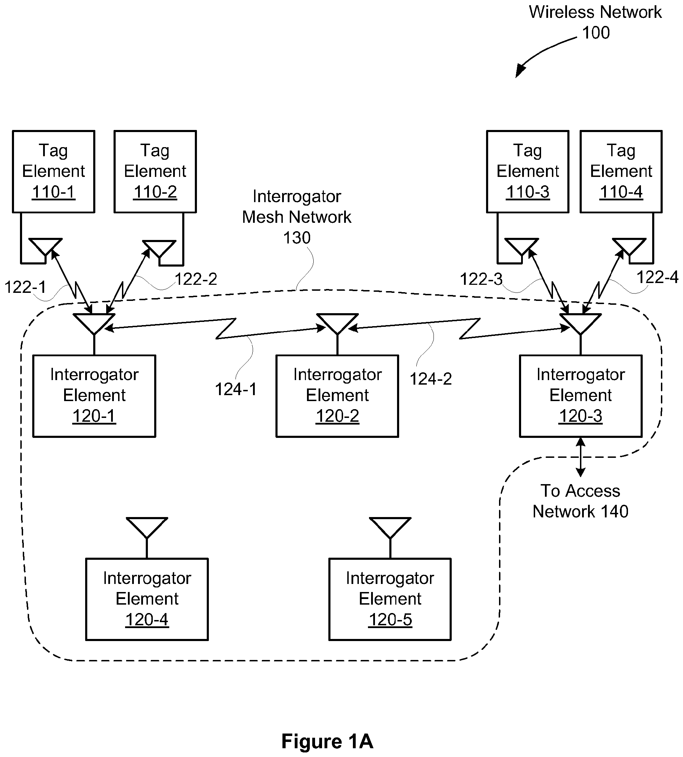

Figure 1A illustrates a wireless network 100, configured to implement one or more aspects of the present invention. The wireless network 100 includes interrogator elements 120 configured to both communicate with tag elements 110 and present as tags to other interrogator elements 120. For example interrogator element 120-1 may interrogate tag elements 110-1 and 110-2 via communications links 122-1 and 122-2, respectively. Each communications link 122 implements an RFID communications protocol employing a certain RF channel, or channels, and appropriate modulation techniques. The RFID communications protocol may also specify a specific range of frequencies organized as available RFID channels. Interrogator element 120-1 may also interrogate interrogator element 120-2, configured to temporarily operate as an RFID tag, via communications link 124-1. Similarly, interrogator element 120-2 may interrogate interrogator element 120-1, also configured to temporarily operate as an RFID tag. In one embodiment, communications links 124 operate within available RFID channels to implement a substantially identical RFID protocol as that implemented for communications links 122. In an alternative embodiment, communications links 124 implement a different protocol than the RFID protocol, for example to facilitate higher performance communications than enabled within the RFID protocol, but still utilizing an available RFID channel and adhering to regulatory requirements of the RFID channel.

Certain passive RFID tags utilize a backscatter modulation technique in which an interrogator element 120 transmits significantly more energy than an amount of backscatter energy received back from a tag element 110. The ratio of transmitted energy versus backscattered energy may be many orders of magnitude in some settings. Receiver sensitivity limitations and regulations defining maximum transmission power levels for RFID interrogators together limit a maximum distance from an interrogator element 120 to a tag element 110.

However, an interrogator element 120 configured to transmit data within maximum transmission power levels over an RFID channel may be located relatively far away from another interrogator element 120 configured to receive the data. Furthermore, two interrogator elements 120, each with an independent power source and each able to generate a unique RF signal for transmission, may be located relatively far apart compared to the maximum distance between an interrogator element 120 and a tag element 110 while achieving two-way communication and operating within the maximum transmission power level. Certain active RFID tags transmit a small amount of energy relative to a companion interrogator, creating a similar scenario, in which two interrogator elements 120 may be located relatively far apart while achieving two-way communication.

In one embodiment, pairs of interrogator elements 120 within an interrogator mesh network 130 are configured to perform two-way communications by taking turns alternately operating as either an RFID reader or an RFID tag. With two-way communication between interrogator elements 120, data may be routed between arbitrary source and destination interrogator elements 120 within interrogator mesh network 130. In an alternative embodiment, pairs of interrogator elements 120 achieve two-way communication within the interrogator mesh network 130 by transmitting data to each other via one or more RFID channels and within maximum transmission power levels, but without specific regard to RFID protocols.

One or more interrogator elements 120 may be coupled to an access network 140, providing access to interrogator elements 120. For example, interrogator element 120-3 may be coupled to an access network 130 via one or more suitable technologies, such as the technologies known in the art as wired Ethernet, WiFi, Bluetooth, or ZigBee.

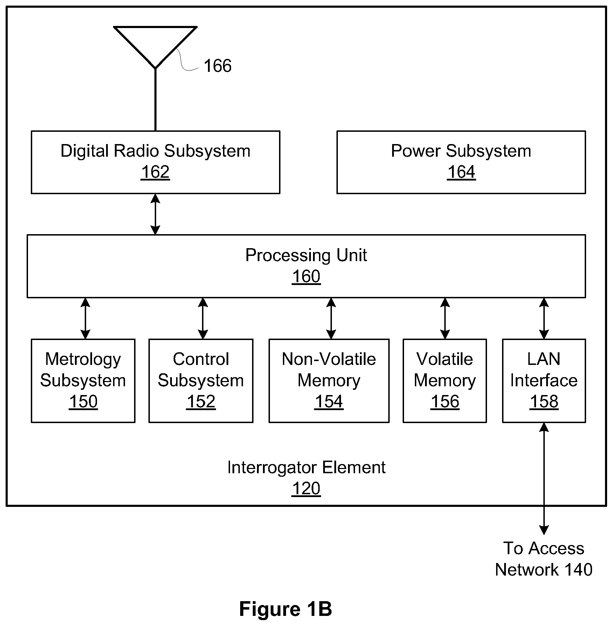

Figure 1B illustrates an interrogator element 120 configured to operate within the wireless network 100 of Figure 1A, according to one embodiment of the invention. The interrogator element 120 comprises a processing unit 160, a digital radio subsystem 162, a power subsystem 164, an antenna 166, a non-volatile memory 154, and volatile memory 156. Certain embodiments also comprise one or more additional elements, such as a metrology subsystem 150, a control subsystem 152, and a local area network (LAN) interface 158.

Processing unit 160 includes a processor core configured to retrieve and execute programming instructions from non-volatile memory 154. During the course of executing the programming instructions, the processor core may also store and retrieve data residing within the volatile memory 156. Digital radio subsystem 162 may include a radio receiver circuit configured to demodulate and digitize incoming RF electrical signals. Digital radio subsystem 162 may also include a radio transmitter circuit configured to modulate a digital signal to generate RF electrical signals for transmission. Antenna 166 converts incident electromagnetic energy into the incoming RF electrical signals and also converts the RF electrical signals for transmission into radiated electromagnetic energy. Power subsystem 164 comprises regulation and power conversion circuitry configured to provide electrical voltage sources to each circuit and subsystem within the interrogator element 120. Power subsystem 164 may also include an energy source such as a photovoltaic system, a battery or fuel cell. In one embodiment, LAN interface 158 includes circuitry to implement wired Ethernet, WiFi, Bluetooth, or ZigBee, or any combination thereof.

Metrology subsystem 150 comprises circuitry configured to perform one or more measurements, such as voltage, current, power, accumulated power, flow rate, accumulated flow, temperature, humidity, vibration, or any other quantifiable physical value or metric. Metrology subsystem 150 quantizes measured results into a digital value for processing and storage by processing unit 160. In one embodiment, metrology subsystem 150 comprises a power meter for measuring accumulated utilization of power. The control system 152 comprises one or more switches for controlling electrical signals. In one embodiment, control system 152 is a power switch for turning electrical power on or off.

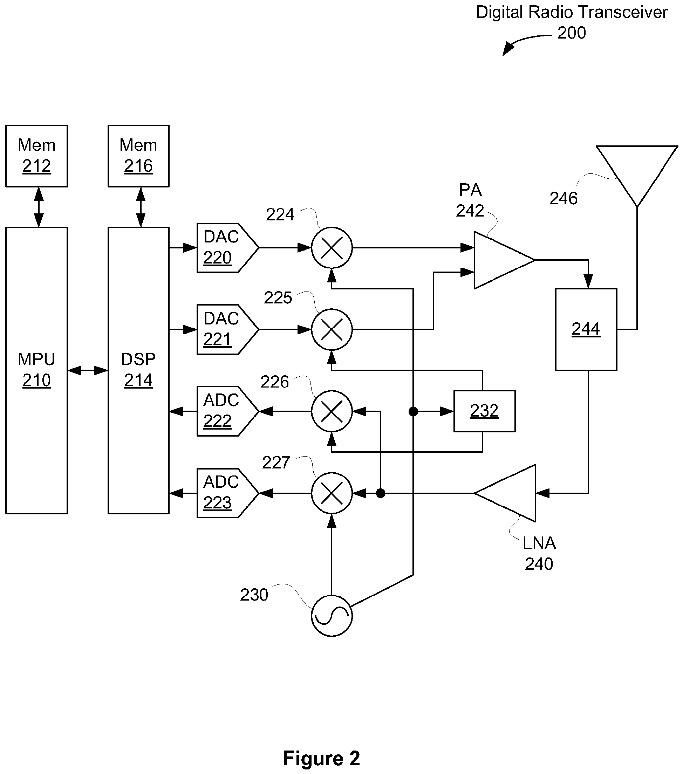

Figure 2 illustrates a digital radio transceiver 200 configured to implement one or more aspects of the present invention. In one embodiment, digital radio transceiver 200 implements digital radio subsystem 162 of Figure 1B. In another embodiment, digital radio transceiver 200 implements digital radio subsystem 162, MPU 210 implements processing unit 160, and memory 212 implements one or both of non-volatile memory 154 and volatile memory 156.

The digital radio transceiver 200 may include, without limitation, a microprocessor unit (MPU) 210, a digital signal processor (DSP) 214, digital to analog converters (DACs) 220, 221, analog to digital converters (ADCs) 222, 223, analog mixers 224, 225, 226, 227, a phase shifter 232, an oscillator 230, a power amplifier (PA) 242, a low noise amplifier (LNA) 240, an antenna switch 244, and an antenna 246. A memory 212 may be coupled to the MPU 210 for local program and data storage. Similarly, a memory 216 may be coupled to the DSP 214 for local program and data storage.

In one embodiment, the MPU 210 implements procedures for processing IP packets transmitted or received as payload data by the digital radio transceiver 200. The procedures for processing the IP packets may include, without limitation, wireless routing, encryption, authentication, protocol translation, and routing between and among different wireless and wired network ports.

The DSP 214 implements signal processing procedures for modulating a serialized representation of payload data comprising packets, such as IP packets or RFID protocol data, for wireless transmission, for example within the frequency range of available RFID channels. The serialized representation may encode one or more bits of payload data per modulation symbol or less than one bit per modulation symbol. A receiver may demodulate each modulation symbol to recover the one or more bits of payload data. In one embodiment the one or more bits of payload data are used to generate a corresponding IP packet. In another embodiment, the one or more bits of payload data are used to form an RFID interrogation message or an RFID interrogation response message.

The DSP 214 may also implement multi-channel modulation for simultaneous transmission of independent units of payload data via multiple, independent channels. Each independent channel occupies a different frequency range in a frequency domain representation of a transmitted radio signal. The DSP 214 also implements signal processing procedures for receiving payload data. The procedures may include, without limitation filtering, energy detection, signal characterization, and simultaneous demodulation of multiple, independent channels.

In one embodiment, the DSP 214 is configured to modulate data within a given channel using a particular modulation technique that is selected form a set of different modulation techniques, based on prevailing channel requirements. For a given packet of data, a particular transmission bit rate may be implemented using one of the different modulation techniques, based on channel conditions. For example, if a selected channel is subjected to a relatively large amount of noise, then a lower bit rate modulation technique that is more tolerant of noise may be selected. Alternatively, if a selected channel is subjected to relatively low noise and low loss, then a higher bit rate modulation technique may be selected despite a potentially reduced noise tolerance. Exemplary modulation techniques known in the art include, without limitation, frequency shift keying (FSK) and quadrature amplitude modulation (QAM). FSK may be implemented as a robust, but relatively low bit rate technique for representing one or more bits of data per modulation symbol as signal energy in at least one of two or more defined frequency bands. QAM may be implemented as a relatively high bit rate technique for representing a set of two or more bits per modulation symbol within an amplitude-phase space. Each possible value represented by the two or more bits is mapped to a unique region within the amplitude-phase space. A collection of regions within the amplitude-phase space is known as a constellation. During modulation, each set of two or more bits comprising a modulation symbol is encoded and mapped to an appropriate region within a corresponding constellation. Persons skilled in the art will understand that quadrature encoded signal pairs may be used to conveniently implement QAM modulation. Furthermore, any technically feasible modulation, demodulation, filtering, energy detection, and signal characterization techniques may be implemented by the DSP 214 without departing the scope and spirit of embodiments of the present invention.

The DSP 214 is coupled to DAC 220 and DAC 221. Each DAC 220, 221 is configured to convert a stream of outbound digital values into a corresponding analog signal. The outbound digital values are computed by the signal processing procedures for modulating one or more channels. The DSP 214 is also coupled to ADC 222 and ADC 223. Each ADC 222, 223 is configured to sample and quantize an analog signal to generate a stream of inbound digital values. The inbound digital values are processed by the signal processing procedures to demodulate and extract payload data from the inbound digital values.

In one embodiment, the DSP 214 generates two modulated streams of outbound digital values, which are converted to corresponding analog quadrature signals by DACs 220, 221. The analog quadrature signals are separately mixed with a radio frequency (RF) carrier signal by analog mixers 224, 225 to generate corresponding quadrature RF signals, each having a frequency domain image centered about the frequency of the RF carrier signal. Oscillator 230 generates the RF carrier signal and phase shifter 232 generates a 90-degree shifted representation of the RF carrier signal for generating quadrature RF signals. The PA 242 combines the quadrature RF signals to generate a modulated RF signal, which is coupled through the antenna switch 244 to the antenna 246. The antenna 246 converts the modulated RF signal from an electrical representation to an electromagnetic representation for wireless transmission. The wireless transmission may be directed to a different instance of the digital radio transceiver 200, residing within a different node of the wireless mesh network 102.

When the digital radio transceiver 200 is receiving data, the antenna 246 converts an incoming electromagnetic RF signal to an electrical RF signal, which is coupled through the antenna switch 244 to the LNA 240. The LNA 240 amplifies the electrical RF signal and couples the amplified RF signal to analog mixers 226 and 227. The amplified RF signal is characterized as having a signal image centered about an RF carrier frequency. The analog mixer 227 shifts the signal image down in frequency to an in-phase baseband component of the signal image. The signal is in-phase with respect to the RF carrier signal generated by oscillator 230. The analog mixer 226 shifts the signal image down in frequency to a 90-degree shifted baseband component of the signal image. The in-phase and 90-degree shifted baseband signals comprise a quadrature representation of one or more channels within the electrical RF signal. A plurality of different frequency channels may be represented within the baseband signals. The DSP 214 is configured to map the stream of inbound digital values, comprising a time domain representation of the baseband signals, to a frequency domain representation of the baseband signals. Persons skilled in the art will recognize that the frequency domain representation may be used to efficiently isolate one data bearing signal within one channel from a signal within a different channel. Similarly, the frequency domain representation may be used to detect noise and interfering transmissions within a given channel.

In one embodiment, the oscillator 230 can be programmed to generate one selected frequency from a plurality of possible frequencies. Each of the plurality of frequencies corresponds to a different channel. The selected frequency determines a center channel for a range of channels that are concurrently available for processing by the DSP 214 to receive or transmit data. For example, if a frequency range of 4 MHz defines ten channels, then each channel is allocated a bandwidth of 400 kHz. In this example, a frequency range of 2,000 kHz representing five channels is processed by the DSP 214 for transmitting or receiving data on one or more of the five channels. If the oscillator 230 is programmed to generate a different selected frequency, then a different set of five concurrently available channels may be used for transmitting or receiving data. The center channel may be changed arbitrarily by programming the oscillator 230 independently of the DSP 214 operating on the concurrently available channels. The digital radio transceiver 200 may be configured with an arbitrary number of concurrently available channels, each having an arbitrary bandwidth without departing the scope and spirit of embodiments of the present invention.

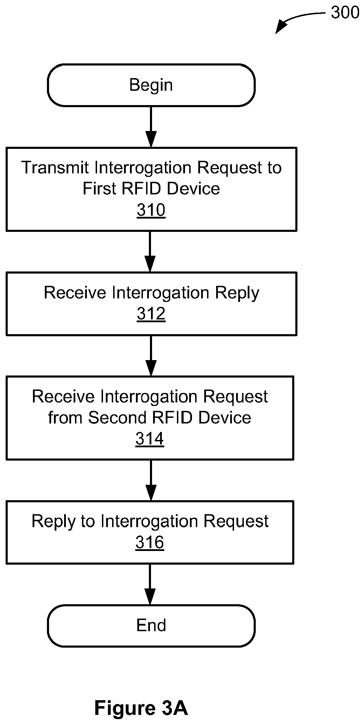

Figure 3A is a flow diagram of a method 300 for bidirectional communication performed by an interrogator element, according to one embodiment of the invention. Although the method steps are described in conjunction with the systems of Figures 1A, 1B and 2, persons skilled in the art will understand that any system configured to perform the method steps, in any order, is within the scope of the present invention. This method 300 may be performed by the interrogator element 120 of Figure 1A.

The method 300 begins in step 310, where the interrogator element 120 transmits an interrogation request to a first RF ID device. In one embodiment, the interrogation request is structured according to any technically feasible RFID protocol, such as the well-known ISO 15693, or ISO 18000-7 protocols. In another embodiment, the interrogation request is structured according to a standard short-distance data protocol such as the well-known IEEE 802.11 (WiFi) standards or IEEE 802.15 (Bluetooth) standards. Prior to transmitting the interrogation request, the interrogator element 120 may configure the digital radio subsystem 162 of Figure 1B to operate according to a particular protocol and on a selected frequency, for example within an available RFID channel. The interrogation request may comprise a read request to retrieve data from the first RFID device or a write request to transmit data to the RFID device. In step 312, the interrogator element 120 receives an interrogation reply from the first RFID device. The interrogation reply may include data from the interrogation element 120 or confirmation that a write operation was successful. In one embodiment, the interrogation reply conforms to the protocol of the interrogation request. After receiving the interrogation reply, the interrogator element 120 may configure the digital radio subsystem 162 to operate in a mode that is receptive to an incoming interrogation request.

In step 314, the interrogator element 120 receives an interrogation request from a second RFID device. In one embodiment, the interrogation request is structured according to an RFID protocol. The interrogation request may comprise a read request to retrieve data within the interrogator element 120 or a write request to transmit data to the interrogator element 120. In step 316, the interrogation element 120 replies to the interrogation request from the second RFID device in accordance with protocol requirements of the interrogation request. The reply may comprise data from the interrogator element 120 or confirmation that a write operation was successful within the interrogator element 120. The method 300 terminates in step 316.

In one embodiment, the first RFID device comprises an RFID tag, such as tag element 110, and the second RFID device comprises a different interrogator element 120. In this embodiment, interrogator element 120-1 may perform method steps 310 and 312 to read a first set of data from tag element 110-1, and method steps 314 and 316 to transmit a second set of data to interrogator element 120-2. The second set of data may include the first set of data or a derivative thereof.

In another embodiment, the first RFID device and the second RFID device both comprise interrogator elements 120. For example, interrogator element 120-2 may perform method steps 310 and 312 to read a first set of data from interrogator element 120-1 and method steps 314 and 316 to transmit a second set of data to interrogator element 120-3. The second set of data may include the first set of data or a derivative thereof. Alternatively, the interrogator element 120-2 may perform method steps 310 and 312 to write a first set of data to interrogator element 120-1 and method steps 314 and 316 to receive a second set of data from interrogator element 120-3. Persons skilled in the art will recognize that data may be pushed from one interrogator element 120 to another using a write mechanism or pulled from one interrogator element 120 to another using a read mechanism. Both read and write mechanisms of communication with RFID tags are known in the art and may be advantageously combined in certain embodiments of the present invention.

In yet another embodiment, the first RFID device and the second RFID device comprise the same type of device, such as interrogator device 120, configured to operate as both an RFID interrogator and an RFID tag. The method steps 310 through 316 may be performed for two-way communication between the two interrogator devices 120.

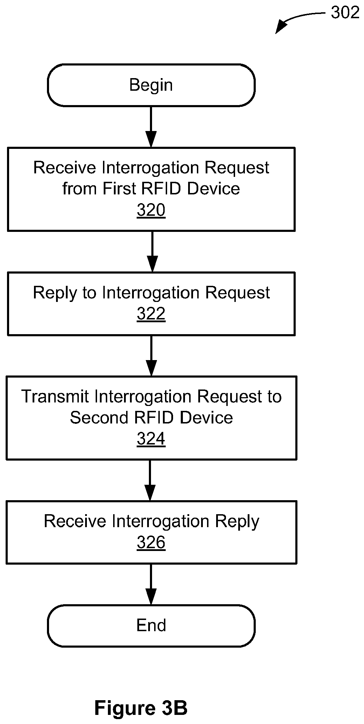

Figure 3B is a flow diagram of a method 302 for bidirectional communication performed by an interrogator element, according to one embodiment of the invention. Although the method steps are described in conjunction with the systems of Figures 1A, 1B and 2, persons skilled in the art will understand that any system configured to perform the method steps, in any order, is within the scope of the present invention. This method 302 may be performed by the interrogator element 120 of Figure 1A.

The method 302 begins in step 320, where the interrogator element 120 receives an interrogation request from a first RF ID device. In one embodiment, the interrogation request is structured according to any technically feasible RFID protocol, such as the well-known ISO 15693, or ISO 18000-7 protocols. In another embodiment, the interrogation request is structured according to a standard short-distance data protocol such as the well-known IEEE 802.11 (WiFi) standards or IEEE 802.15 (Bluetooth) standards. Prior to receiving the interrogation request, the interrogator element 120 may configure the digital radio subsystem 162 of Figure 1B to operate according to a particular protocol and on a selected frequency, for example within an available RFID channel. The interrogation request may comprise a read request to retrieve data from the interrogator element 120 or a write request to transmit data to the interrogator element 120.

In step 322, the interrogator element 120 replies to the interrogation request by transmitting an interrogation reply from the first RFID device. In one embodiment, the interrogation reply conforms to the protocol of the interrogation request. The interrogation reply may include data from the interrogation element 120 or confirmation that a write operation was successful within the interrogation element 120. The interrogator element 120 may configure the digital radio subsystem 162 to confirm to a particular protocol, such as an RFID protocol, prior to transmitting the interrogation reply. After transmitting the interrogation reply, the interrogator element 120 may configure the digital radio subsystem 162 to operate in a mode that is receptive to another incoming interrogation request.

In step 324, the interrogator element 120 transmits an interrogation request to a second RFID device. In one embodiment, the interrogation request is structured according to an RFID protocol. The interrogation request may comprise a read request to retrieve data within the second RFID device or a write request to transmit data to the second RFID device. In step 326, the interrogation element 120 replies to the interrogation request from the second RFID device in accordance with protocol requirements of the interrogation request. The reply may comprise data from the second RFID device or confirmation that a write operation was successful within the second RFID device. The method 302 terminates in step 326.

In one embodiment, the first RFID device and the second RFID device both comprise interrogator elements 120. For example, interrogator element 120-2 may perform method steps 320 and 322 to receive a first set of data from interrogator element 120-1 and method steps 314 and 316 to transmit a second set of data to interrogator element 120-3. The second set of data may include the first set of data or a derivative thereof. Alternatively, the interrogator element 120-2 may perform method steps 310 and 312 to transmit a first set of data to interrogator element 120-1 and method steps 314 and 316 to receive a second set of data from interrogator element 120-3. Persons skilled in the art will recognize that data may be pushed from one interrogator element 120 to another using a write mechanism or pulled from one interrogator element 120 to another using a read mechanism. Both read and write mechanisms of communication with RFID tags are known in the art and may be advantageously combined in certain embodiments of the present invention.

In another embodiment, the first RFID device comprises interrogator element 120-2, and the second RFID device comprises tag element 110-1. In this embodiment, interrogator element 120-1 may perform method steps 320 and 322 to receive a first set of data from interrogator element 120-2, and method steps 324 and 326 to read a second set of data from tag element 110-1.

In yet another embodiment, the first RFID device and the second RFID device comprise the same device, such as another interrogator device 120. The method steps 320 through 326 may be performed for two-way communication between the two interrogator devices 120.

In certain embodiments, the interrogator element 120 implements a power meter configured to measure accumulated power consumption and report the accumulated power consumption via the interrogator mesh network 130 of Figure 1A to a server coupled to the access network 140. In such embodiments, each interrogator element 120 may operate independently to measure a corresponding sample of accumulated power consumption and report the sample of accumulated power consumption via a push regime or a pull regime, or a combination thereof through the interrogator mesh network 130. In this way, accumulated power consumption samples for all interrogator elements 120 may be gathered by the server.

### Metering Network

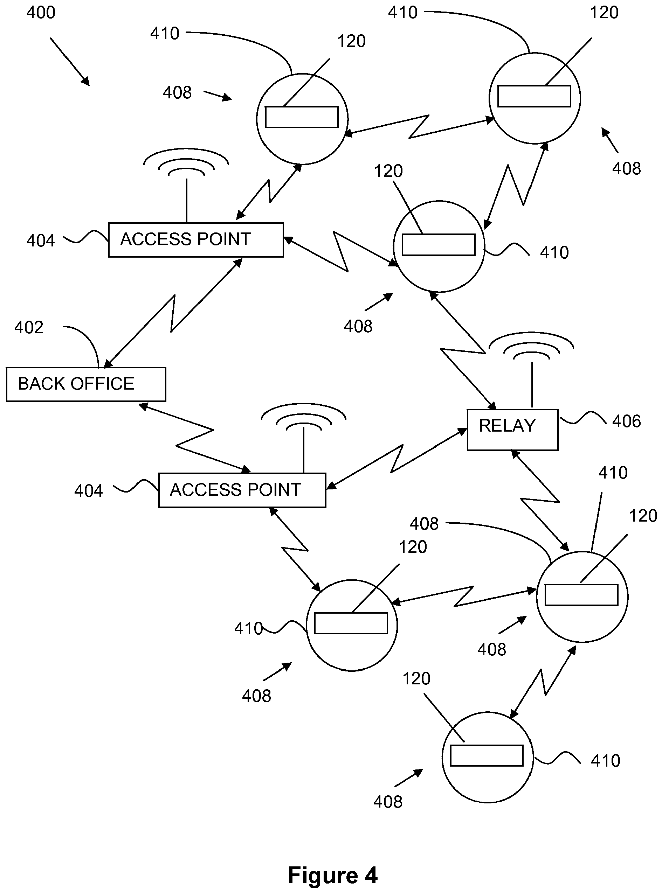

Figure 4 illustrates a metering network 400, according to one embodiment of the present invention. As shown, metering network 400 comprises back office 402, access points 404, relays 406, and smart meters 408. Smart meters 408 take readings and send the readings through other smart meters 408, relays 406, and access points 404, to back office 402. Relays 406 are present to extend the range of smart meters 408. Access points 404 provide an interface between smart meters 408 and back office 402. Back office 402 queries smart meters 408, analyzes, and integrates readings from smart meters 408. Relays 406, smart meters 408, and access points 404 may implement a mesh network 130 as described above.

Smart meter 408 comprises data meter 410 and interrogator element 120, as described above. Access points 404 and relays 406 may also have interrogator elements 120 for communication between elements in network 400. Data meter 410 may be any type of meter for providing readings, such as utility readings, including a gas meter for measuring gas consumption, an electricity meter for measuring electricity consumption, and the like. Data meter 410 may collect and store data. If data meter 410 measures electricity, it may collect data such as customer usage, distribution network voltage, instantaneous current, power factor, device tamper and alarms. Data meter 410 may be any of a large number of types of devices, such as electric meters, fault indicators, capacitor banks and switch re-closures. Interrogator element 120 is coupled to data meter 410 and can transmit readings from data meter 410 to network 400. Interrogator element 120 therefore acts as a "transmitter" for data recorded by data meter 410. In one embodiment, interrogator element 120 in data meter 410 is a class 4 active RFID module.

To obtain data from smart meters 408, back office 402 sends requests for information ("data queries"), through access points 404, to smart meters 408. Smart meters 408 respond to the requests for information with data regarding the smart meter's 408 readings. Back office 402 may send data queries periodically, so that back office 402 receives a constant stream of data from smart meters 408 in order to perform analysis on the data. Back office 402 may store a database of data and update the database each time data is received from smart meters 408. Back office 402 may comprise a distributed web-based computer system that provides web-based access to meter data for a client.

Smart meters 408 are configured to send "alerts" to back office 402 if specific events occur. For example, if smart meter 408 detects certain sensor conditions or alarms, smart meter 408 sends an alert through network 400 to back office 402. The alert sent contains information regarding the specific alert. "Alerts" may indicate conditions that require immediate attention.

Network 400 is scalable in that new smart meters 408 may be added to the network. If a new smart meter 408 is not connected to network 400, the new smart meter 408 periodically sends "discovery" signals permitting network 400 to "discover" the new smart meter. When a new smart meter 408 is within range of another network 400 component such as a smart meter 408, access point 404, or relay 406, discovery signals may be detected by the new smart meter 408. To add the new smart meter 408 to the network 400, an authentication procedure begins in which the new smart meter 408 is authenticated, identified, and added to the network 400.

In one embodiment, smart meters 408 may authenticate utilizing three security credentials: a private key unique to the interrogator element 120, a "birth certificate" containing a public key corresponding to the private key, wherein the public key is derived from the X.509 Digital Certificate of the manufacturer of the RFID tag in the interrogator element 120, and the manufacturing station certificate. These certificates correspond to a securely held root key token, through intermediate certificates, as is known.

Together, the birth certificate and private key of the interrogator element 120 constitute the cryptographic identity (CI) of the interrogator element 120. In one embodiment, the birth certificate and private key of the interrogator element 120 may not be changed and thus uniquely and immutably identify the interrogator element 120. In addition to uniquely identifying the device, the cryptographic identity also defines the specific usage or role of the device. In other words, back office 402 may keep track of all cryptographic identities and their corresponding roles (type of meter, such as electric, gas, and the like). Additional information that is operationally useful can also be kept track of and can correspond to unique cryptographic identities.

The cryptographic identity may be used during establishment of a link between smart meter 408 and the rest of the network 400, may be used to identify the smart meter 408 to the back office 402, and may be used to validate data sent from smart meter 408 to the back office 402.

Additional information may be used to identify interrogator elements 120 and smart meters 408. For example, each interrogator element 120 in smart meter 408 has an RFID Tag Identifier (TID). In one embodiment, the TID of an interrogator element 120 may be fixed at manufacturing and does not change for the life of the product. In one embodiment, the TID is formatted as a EUI-64 unique identifier. Interrogator elements 120 may also have a meter ID that identifies the data meter 410 with which interrogator element 120 is associated. In one embodiment, meter IDs are unique by regulatory region.

Each smart meter 408 may also periodically send out maintenance information to devices operating in the communications range of the smart meter 408 to maintain network 400. The maintenance information allows other devices to communicate with the smart meter 408. The maintenance information may include information regarding communication paths from the smart meter 408 through other smart meters 408 and relays 406, to access points 404, including indications of which specific smart meters 408, relays 406, and access points 404 constitute the communication paths. Sending out periodic maintenance information also allows smart meters 408 to re-configure the network 400, in case of any changes to elements within the network (location, malfunction, removal, and the like), by allowing elements to determine new communication paths to access points 404.

All elements within network 400 may be powered in any number of ways, including by battery or by drawing on power from the utility grid (e.g., electric grid) to which they are attached.

In one embodiment, interrogator elements 120 may transmit information exclusively utilizing RFID interrogator channels identified by applicable regulatory requirements. In one embodiment, interrogator elements 120 may be equipped with UHF transmitters to permit transmission of data.

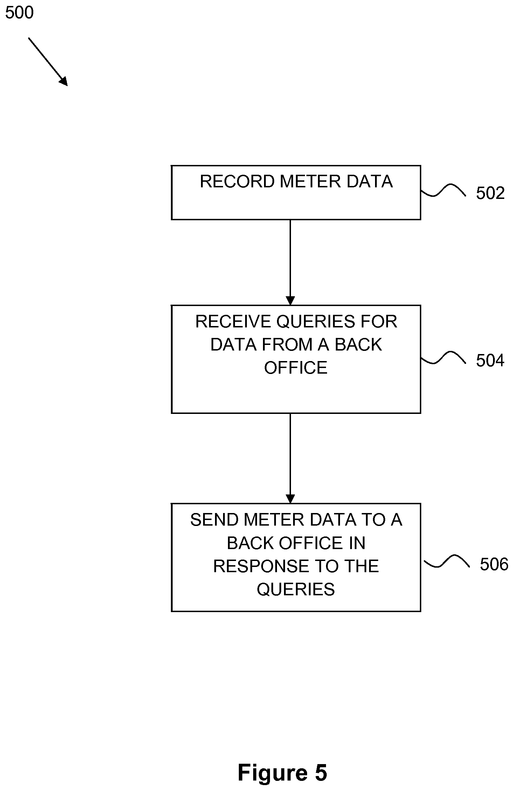

Figure 5 is a flow diagram of method steps for transmitting metering data via a metering network, according to one embodiment of the present invention. Although the method steps are described in conjunction with Figures 1-4, persons skilled in the art will understand that any system configured to perform the method steps, in any order, falls within the scope of the present invention.

The method 500 begins at step 502, where the smart meter 408 records meter data. At step 504, the smart meter 408 receives queries from the network 400 to provide the data recorded at step 502. At step 506, the smart meter 408 sends meter data to the back office 402 in response to the queries.

In sum, a technique for implementing two-way communication between interrogator elements in a wireless network is disclosed. An interrogator element is configured to operate as both an RFID reader and an RFID tag to achieve two-way communication with a different interrogator element. Each interrogator element may participate in an interrogator mesh network configured to route data between the participating interrogator elements. Each interrogator element may also act as a conventional RFID interrogator that communicates with RFID tag devices.

One advantage of the disclosed systems and methods is that a backhaul network that interconnects RFID interrogators may be efficiently implemented by combining interrogator and tag behavior within a single interrogator element device.

While the forgoing is directed to embodiments of the present invention, other and further embodiments of the invention may be devised without departing from the basic scope thereof. For example, aspects of the present invention may be implemented in hardware or software or in a combination of hardware and software. One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored. Such computer-readable storage media, when carrying computer-readable instructions that direct the functions of the present invention, are embodiments of the present invention.

In view of the foregoing, the scope of the present invention is determined by the claims that follow.

## Claims

1. A computer-implemented method for transmitting and receiving data via a radio signal, the method comprising:
transmitting, from a first interrogator element (120-1), a first interrogation request to a first tag element (110-1, 110-2) via a first communication link (122-1, 122-2) implementing a first communication protocol, the first communication protocol being an RFID communication protocol;
receiving, at the first interrogator element (120-1), a first interrogation reply from the first tag element via the first communication link (122);
receiving, at the first interrogator element (120-1), a second interrogation request from a second interrogator element (120-2) via a second communication link (124-1) implementing a second communication protocol, the second communication protocol being a communication protocol other than the RFID communication protocol; and
transmitting, from the first interrogator element (120-1), a second interrogation reply to the second interrogator element (120-1) in response to the second interrogation request, the second interrogation reply being transmitted using the second communication protocol via said second communication link (124-1).

2. The method of claim 1, wherein the first interrogation request comprises a read request for a first set of data residing within the first tag element (110-1, 110-2), and the first interrogation reply comprises a first message that includes the first set of data.

3. The method of claim 1, wherein the first interrogation request comprises a write request for a second set of data to be written to the first tag element (110-1, 110-2), and the first interrogation reply comprises a second message that confirms a successful write operation for the second set of data within the first tag element (110).

4. The method of claim 1, wherein the second interrogation request comprises a read request for a third set of data residing within the first interrogator element (120-1), and the second interrogation reply comprises a third message that includes the third set of data.

5. The method of claim 1, wherein the second interrogation request comprises a write request for a fourth set of data to be written to the first interrogator element (120-1), and the second interrogation reply comprises a fourth message that confirms a successful write operation for the fourth set of data within the first interrogator element (120-1).

6. The method of claim 1, further comprising:
receiving a third interrogation request from a third interrogator element (120-4);
transmitting a third interrogation reply to the third interrogator element (120-4) in response to the third interrogation request;
transmitting a fourth interrogation request to a fourth interrogator element (120-5); and
receiving a fourth interrogation reply from the fourth interrogator element (120-5).

7. The method of claim 6, wherein the third interrogation request comprises a read or write request for data residing with the first interrogator element (120-1), and the fourth interrogation request comprises a read or write request for data residing within the fourth interrogator element (120-5).

8. The method of claim 2, wherein the first set of data comprises metrology data measured by the first tag element (110-1, 110-2).

9. The method of claim 8, wherein the metrology data comprises accumulated power consumption data.

10. The method of claim 1, wherein the first tag element (110-1, 110-2) and the first interrogator element (110-1, 110-2) are configured to transmit data using one or more radio frequency identification, RFID, channels.

11. A computer program product including instructions that, when executed by a processing unit, cause the processing unit to perform the steps as defined in any one of claims 1 to 10.

12. A wireless network device (120, 120-1), comprising:
a digital radio circuit configured to generate a radio signal for data transmission and to receive a signal for data reception; and
a processing unit that is coupled to the radio transmitter circuit and configured to:
transmit a first interrogation request to a first tag element (110-1, 110-2) via a first communication link (122-1, 122-2) implementing a first communication protocol, the first communication protocol being an RFID communication protocol;
receive a first interrogation reply from the first tag element (110-1, 110-2) via the first communication link (122-1, 122-2);
receive a second interrogation request from a second interrogator element (120-2) via a second communication link (124-1) implementing a second communication protocol, the second communication protocol being a communication protocol other than the RFID communication protocol;
transmit a second interrogation reply to the second interrogator element (120-2) in response to the second interrogation request, the second interrogation reply being transmitted using the second communication protocol, via said second communication link (124-1).

13. The wireless network device of claim 12, wherein the processing unit is further configured to;
receive a third interrogation request from a third interrogator element (120-4);
transmit a third interrogation reply to the third interrogator element (120-4) in response to the third interrogation request;
transmit a fourth interrogation request to a fourth interrogator element (120-5); and
receive a fourth interrogation reply from the fourth interrogator element (120-5).

14. The wireless network device of claim 13, wherein the first set of data comprises accumulated power consumption data measured by the first tag element (110).

## Patentansprüche

1. Computerimplementiertes Verfahren zum Übertragen und Empfangen von Daten via ein Funksignal, wobei das Verfahren Folgendes umfasst:
Übertragen einer ersten Abfrageanforderung von einem ersten Abfrageeinrichtungselement (120-1) via eine erste Kommunikationsverbindung (122-1, 122-2), die ein erstes Kommunikationsprotokoll implementiert, zu einem ersten Tagelement (110-1, 110-2), wobei das erste Kommunikationsprotokoll ein RFID-Kommunikationsprotokoll ist;
Empfangen einer ersten Abfrageantwort am ersten Abfrageeinrichtungselement (120-1) via die erste Kommunikationsverbindung (122) vom ersten Tagelement;
Empfangen einer zweiten Abfrageanforderung via eine zweite Kommunikationsverbindung (124-1), die ein zweites Kommunikationsprotokoll implementiert, am ersten Abfrageeinrichtungselement (120-1) von einem zweiten Abfrageeinrichtungselement (120-2), wobei das zweite Kommunikationsprotokoll ein anderes Kommunikationsprotokoll als das RFID-Kommunikationsprotokoll ist; und
Übertragen einer zweiten Abfrageantwort vom ersten Abfrageeinrichtungselement (120-1) in Reaktion auf die zweite Abfrageanforderung zum zweiten Abfrageeinrichtungselement (120-1), wobei die zweite Abfrageantwort unter Verwendung des zweiten Kommunikationsprotokolls via die zweite Kommunikationsverbindung (124-1) übertragen wird.

2. Verfahren nach Anspruch 1, wobei die erste Abfrageanforderung eine Leseanforderung für einen ersten Satz von Daten umfasst, der sich im ersten Tagelement (110-1, 110-2) befindet, und die erste Abfrageantwort eine erste Nachricht umfasst, die den ersten Satz von Daten beinhaltet.

3. Verfahren nach Anspruch 1, wobei die erste Abfrageanforderung eine Schreibanforderung für einen zweiten Satz von Datenumfasst, der in das erste Tagelement (110-1, 110-2) zu schreiben ist, und die erste Abfrageantwort eine zweite Nachricht umfasst, die eine erfolgreiche Schreiboperation für den zweiten Satz von Daten im ersten Tagelement (110) bestätigt.

4. Verfahren nach Anspruch 1, wobei die zweite Abfrageanforderung eine Leseanforderung für einen dritten Satz von Daten umfasst, der sich im ersten Abfrageeinrichtungselement (120-1) befindet, und die zweite Abfrageantwort eine dritte Nachricht umfasst, die den dritten Satz von Daten beinhaltet.

5. Verfahren nach Anspruch 1, wobei die zweite Abfrageanforderung eine Schreibanforderung für einen vierten Satz von Daten umfasst, der in das erste Abfrageeinrichtungselement (120-1) zu schreiben ist, und die zweite Abfrageantwort eine vierte Nachricht umfasst, die eine erfolgreiche Schreiboperation für den vierten Satz von Daten im ersten Abfrageeinrichtungselement (120-1) bestätigt.

6. Verfahren nach Anspruch 1, das ferner Folgendes umfasst:
Empfangen einer dritten Abfrageanforderung von einem dritten Abfrageeinrichtungselement (120-4);
Übertragen einer dritten Abfrageantwort in Reaktion auf die dritte Abfrageanforderung zum dritten Abfrageeinrichtungselement (120-4);
Übertragen einer vierten Abfrageanforderung zu einem vierten Abfrageeinrichtungselement (120-5) und
Empfangen einer vierten Abfrageantwort vom vierten Abfrageeinrichtungselement (120-5).

7. Verfahren nach Anspruch 6, wobei die dritte Abfrageanforderung eine Lese- oder Schreibanforderung für Daten umfasst, die sich im ersten Abfrageeinrichtungselement (120-1) befinden, und die vierte Abfrageanforderung eine Lese- oder Schreibanforderung für Daten umfasst, die sich im vierten Abfrageeinrichtungselement (120-5) befinden.

8. Verfahren nach Anspruch 2, wobei der erste Satz von Daten Messdaten umfasst, die vom ersten Tagelement (110-1, 110-2) gemessen wurden.

9. Verfahren nach Anspruch 8, wobei die Messdaten akkumulierte Stromverbrauchsdaten umfassen.

10. Verfahren nach Anspruch 1, wobei das erste Tagelement (110-1, 110-2) und das erste Abfrageeinrichtungselement (110-1, 110-2) dazu ausgelegt sind, Daten unter Verwendung von einem oder mehreren Funkfrequenzidentifikations(RFID)-Kanälen zu übertragen.

11. Computerprogrammprodukt, das Anweisungen beinhaltet, die, wenn sie von einer Verarbeitungseinheit ausgeführt werden, die Verarbeitungseinheit veranlassen, die in einem der Ansprüche 1 bis 10 definierten Schritte durchzuführen.

12. Drahtlose Netzwerkvorrichtung (120, 120-1), die Folgendes umfasst:
eine digitale Funkschaltung, die dazu ausgelegt ist, ein Funksignal für die Datenübertragung zu erzeugen und ein Signal für den Datenempfang zu empfangen; und
eine Verarbeitungseinheit, die an die Funksenderschaltung gekoppelt und zu Folgendem ausgelegt ist:
Übertragen einer ersten Abfrageanforderung via eine erste Kommunikationsverbindung (122-1, 122-2), die ein erstes Kommunikationsprotokoll implementiert, zu einem ersten Tagelement (110-1, 110-2), wobei das erste Kommunikationsprotokoll ein RFID-Kommunikationsprotokoll ist;
Empfangen einer ersten Abfrageantwort via die erste Kommunikationsverbindung (122-1, 122-2) vom ersten Tagelement (110-1, 110-2);
Empfangen einer zweiten Abfrageanforderung via eine zweite Kommunikationsverbindung (124-1), die ein zweites Kommunikationsprotokoll implementiert, von einem zweiten Abfrageeinrichtungselement (120-2), wobei das zweite Kommunikationsprotokoll ein anderes Kommunikationsprotokoll als das RFID-Kommunikationsprotokoll ist;
Übertragen einer zweiten Abfrageantwort in Reaktion auf die zweite Abfrageanforderung zum zweiten Abfrageeinrichtungselement (120-2), wobei die zweite Abfrageantwort unter Verwendung des zweiten Kommunikationsprotokolls via die zweite Kommunikationsverbindung (124-1) übertragen wird.

13. Drahtlose Netzwerkvorrichtung nach Anspruch 12, wobei die Verarbeitungseinheit ferner zu Folgendem ausgelegt ist;
Empfangen einer dritten Abfrageanforderung von einem dritten Abfrageeinrichtungselement (120-4);
Übertragen einer dritten Abfrageantwort in Reaktion auf die dritte Abfrageanforderung zum dritten Abfrageeinrichtungselement (120-4);
Übertragen einer vierten Abfrageanforderung zu einem vierten Abfrageeinrichtungselement (120-5) und Empfangen einer vierten Abfrageantwort vom vierten Abfrageeinrichtungselement (120-5).

14. Drahtlose Netzwerkvorrichtung nach Anspruch 13, wobei der erste Satz von Daten akkumulierte Stromverbrauchsdaten umfasst, die vom ersten Tagelement (110) gemessen wurden.

## Revendications

1. Procédé mis en œuvre par ordinateur pour transmettre et recevoir des données par l'intermédiaire d'un signal radio, le procédé comprenant :
la transmission, à partir d'un premier élément interrogateur (120-1), d'une première demande d'interrogation à un premier élément d'étiquette (110-1, 110-2) par l'intermédiaire d'une première liaison de communication (122-1, 122-2) mettant en œuvre un premier protocole de communication, le premier protocole de communication étant un protocole de communication RFID ;
la réception, au niveau du premier élément interrogateur (120-1), d'une première réponse d'interrogation provenant du premier élément d'étiquette par l'intermédiaire de la première liaison de communication (122) ;
la réception, au niveau du premier élément interrogateur (120-1), d'une deuxième demande d'interrogation provenant d'un deuxième élément interrogateur (120-2) par l'intermédiaire d'une deuxième liaison de communication (124-1) mettant en œuvre un deuxième protocole de communication, le deuxième protocole de communication étant un protocole de communication autre que le protocole de communication RFID ; et
la transmission, à partir du premier élément interrogateur (120-1), d'une deuxième réponse d'interrogation au deuxième élément interrogateur (120-1) en réponse à la deuxième demande d'interrogation, la deuxième réponse d'interrogation étant transmise en utilisant le deuxième protocole de communication par l'intermédiaire de ladite deuxième liaison de communication (124-1).

2. Procédé selon la revendication 1, dans lequel la première demande d'interrogation comprend une demande de lecture pour un premier ensemble de données résidant dans le premier élément d'étiquette (110-1, 110-2), et la première réponse d'interrogation comprend un premier message qui inclut le premier ensemble de données.

3. Procédé selon la revendication 1, dans lequel la première demande d'interrogation comprend une demande d'écriture pour un deuxième ensemble de données à écrire dans le premier élément d'étiquette (110-1, 110-2), et la première réponse d'interrogation comprend un deuxième message qui confirme une opération d'écriture réussie pour le deuxième ensemble de données dans le premier élément d'étiquette (110).

4. Procédé selon la revendication 1, dans lequel la deuxième demande d'interrogation comprend une demande de lecture pour un troisième ensemble de données résidant dans le premier élément interrogateur (120-1), et la deuxième réponse d'interrogation comprend un troisième message qui comprend le troisième ensemble de données.

5. Procédé selon la revendication 1, dans lequel la deuxième demande d'interrogation comprend une demande d'écriture pour un quatrième ensemble de données à écrire dans le premier élément interrogateur (120-1), et la deuxième réponse d'interrogation comprend un quatrième message qui confirme une opération d'écriture réussie pour le quatrième ensemble de données dans le premier élément interrogateur (120-1).

6. Procédé selon la revendication 1, comprenant en outre :
la réception d'une troisième demande d'interrogation provenant d'un troisième élément interrogateur (120-4) ;
la transmission d'une troisième réponse d'interrogation au troisième élément interrogateur (120-4) en réponse à la troisième demande d'interrogation ;
la transmission d'une quatrième demande d'interrogation à un quatrième élément interrogateur (120-5) ; et
la réception d'une quatrième réponse d'interrogation du quatrième élément interrogateur (120-5).

7. Procédé selon la revendication 6, dans lequel la troisième demande d'interrogation comprend une demande de lecture ou d'écriture de données résidant avec le premier élément interrogateur (120-1), et la quatrième demande d'interrogation comprend une demande de lecture ou d'écriture de données résidant dans le quatrième élément interrogateur (120-5).

8. Procédé selon la revendication 2, dans lequel le premier ensemble de données comprend des données de métrologie mesurées par le premier élément d'étiquette (110-1, 110-2).

9. Procédé selon la revendication 8, dans lequel les données de métrologie comprennent des données de consommation d'énergie accumulée.

10. Procédé selon la revendication 1, dans lequel le premier élément d'étiquette (110-1, 110-2) et le premier élément interrogateur (110-1, 110-2) sont configurés pour transmettre des données en utilisant un ou plusieurs canaux d'identification par radiofréquence, RFID.

11. Produit programme informatique comprenant des instructions qui, lorsqu'elles sont exécutées par une unité de traitement, amènent l'unité de traitement à exécuter les étapes telles que définies dans l'une quelconque des revendications 1 à 10.

12. Dispositif de réseau sans fil (120, 120-1), comprenant :
un circuit radio numérique configuré pour générer un signal radio pour la transmission de données et pour recevoir un signal pour la réception de données ; et
une unité de traitement qui est couplée au circuit émetteur radio et configurée pour :
transmettre une première demande d'interrogation à un premier élément d'étiquette (110-1, 110-2) par l'intermédiaire d'une première liaison de communication (122-1, 122-2) mettant en œuvre un premier protocole de communication, le premier protocole de communication étant un protocole de communication RFID ;
recevoir une première réponse d'interrogation du premier élément d'étiquette (110-1, 110-2) par l'intermédiaire de la première liaison de communication (122-1, 122-2) ;
recevoir une deuxième demande d'interrogation d'un deuxième élément interrogateur (120-2) par l'intermédiaire d'une deuxième liaison de communication (124-1) mettant en œuvre un deuxième protocole de communication, le deuxième protocole de communication étant un protocole de communication autre que le protocole de communication RFID ;
transmettre une deuxième réponse d'interrogation au deuxième élément interrogateur (120-2) en réponse à la deuxième demande d'interrogation, la deuxième réponse d'interrogation étant transmise en utilisant le deuxième protocole de communication, par l'intermédiaire de ladite deuxième liaison de communication (124-1).

13. Dispositif de réseau sans fil selon la revendication 12, dans lequel l'unité de traitement est en outre configurée pour ;
recevoir une troisième demande d'interrogation d'un troisième élément interrogateur (120-4) ;
transmettre une troisième réponse d'interrogation au troisième élément interrogateur (120-4) en réponse à la troisième demande d'interrogation ;
transmettre une quatrième demande d'interrogation à un quatrième élément interrogateur (120-5) ; et
recevoir une quatrième réponse d'interrogation du quatrième élément interrogateur (120-5).

14. Dispositif de réseau sans fil selon la revendication 13, dans lequel le premier ensemble de données comprend des données de consommation d'énergie accumulées mesurées par le premier élément d'étiquette (110).
